(19) Europäisches Patentamt
European Patent Office
Office européen des brevets

(11) **EP 0 488 377 B1**

(12) **EUROPEAN PATENT SPECIFICATION**

(45) Date of publication and mention
of the grant of the patent:
**16.04.1997 Bulletin 1997/16**

(51) Int Cl.⁶: **G11B 5/66**, G11B 5/716,
G11B 5/85

(21) Application number: **91120529.2**

(22) Date of filing: **29.11.1991**

(54) **Magnetic recording medium and method of magnetically recording analog or, preferably, digital picture signals**

Magnetischer Aufnahmeträger und Verfahren zur magnetischen Aufnahme von analogen oder, vorzugsweise, digitalen Bildsignalen

Support d'enregistrement magnétique et méthode pour enregistrer magnétiquement des signaux d'image analogues ou, de manière préférentielle, digitaux

(84) Designated Contracting States:
**DE FR GB**

(30) Priority: **30.11.1990 JP 329625/90**
**19.03.1991 JP 80680/91**

(43) Date of publication of application:
**03.06.1992 Bulletin 1992/23**

(73) Proprietor: **SONY CORPORATION**
**Tokyo 141 (JP)**

(72) Inventors:
• **Chiba, Kazunobu, c/o Sony Magnetic Prod. Inc.**
**Shinagawa-ku, Tokyo (JP)**
• **Sato, Kenichi, c/o Sony Magnetic Prod. Inc.**
**Shinagawa-ku, Tokyo (JP)**
• **Arisaka, Yuichi, c/o Sony Magnetic Prod. Inc.**
**Shinagawa-ku, Tokyo (JP)**
• **Yamada, Yukari, c/o Sony Magnetic Prod. Inc.**
**Shinagawa-ku, Tokyo (JP)**

(74) Representative:
**Schmidt-Evers, Jürgen, Dipl.-Ing. et al**
**Patentanwälte**
**Mitscherlich & Partner,**
**Postfach 33 06 09**
**80066 München (DE)**

(56) References cited:
**EP-A- 0 216 610** **EP-A- 0 303 450**
**EP-A- 0 415 335**

• **IEEE TRANSACTIONS ON MAGNETICS vol. MAG22, no. 5, September 1986, NEW YORK, USA**
• **PATENT ABSTRACTS OF JAPAN vol. 12, no. 345 (P-759)(3192) 16 September 1988**
• **IEEE TRANSACTIONS ON CONSUMER ELECTRONICS vol. 35, no. 3, 1989, NEW YORK, US pages 421 - 427 CHIBA ET AL. 'Metal Evaporated Tape for High Band 8mm Video System'**
• **PATENT ABSTRACTS OF JAPAN vol. 11, no. 313 (P-626)13 October 1987**

## Description

The present invention relates to a magnetic recording medium and to a method of magnetically recording picture signals, preferably suitable for recording digital picture signals, such as digital video signals, on a magnetic tape.

But the magnetic recording medium of the present invention is also applicable for analogue video signal recording, for example, in video 8 system.

Recently, digital VTRs for converting color video signals into digital picture signals and recording the digital picture signals on a recording medium, such as a magnetic tape, have been put to practical use for broadcasting service. Those digital VTRs are classified into component type D1 format digital VTRs and composite type D2 format digital VTRs.

The D1 format digital VTR converts a luminance signal, and first and second color difference signals into digital signals at sampling frequencies of 13.5 MHz, 6.75 MHz and 6.75 MHz, respectively, and subjects the digital signals to predetermined signal processing to record the digital signals on a magnetic tape. Since the ratio between the sampling frequencies for sampling the components is 4:2:2, the D1 format digital VTR is called as a digital VTR of 4:2:2 system.

The D2 format digital VTR converts composite color video signals into digital signals by sampling the composite color video signals at a sampling frequency four times the frequency $F_{sc}$ of the chrominance subcarrier signal, and subjects the digital signals to predetermined signal processing to record the digital signals on a magnetic tape.

Since these digital VTRs are designed for broadcasting service, the digital VTRs record a digital color video signal of, for example, a sample of eight bits without substantial compression to give the highest priority to picture quality.

The bit rate of date to be dealt with by the D1 format digital VTR will be explained by way of example.

The bit rate of a color video signal is about 216 Mbps (megabits per second) when each sample is converted into eight-bit data at the foregoing sampling frequency. When data corresponding to the horizontal and vertical blanking intervals are omitted, the number of effective picture elements of the luminance signal in one horizontal invertal is 720 and the number of effective picture elements of the color difference signal in one horizontal invertal is 360. Since the number of effective scanning lines for each field in the NTSC color television system (525/60) is 250, the bit rate $D_v$ of image signals is 172.8 Mbps = (720 + 360 + 360) x 8 x 250 x 60.

In the PAL color television system (625/50), the number of effective scanning lines for each field is 300 and fifty fields are transmitted every second, the bit rate of the PAL color television system is equal to that of the NTSC color television system. When redundancy component for error correction and formatting is added to those data, the bite rate of image data is about 205.8 Mbps.

Since the bit rate $D_a$ of audio data is about 12.8 Mbps and the bit rate of $D_o$ of overhead data including gaps, preambles and postambles for edition is about 6.6 Mbps, the total bit rate $D_t$ of recording data in the NTSC color television system is expressed by

$$D_t = D_v + D_a + D_o = 172.8 + 12.8 + 6.6 = 192.2 \text{ Mbps.}$$

In recording data at such a bit rate, the D1 format digital VTR employs a segment system which uses ten tracks for one field in the NTSC system, and twelve tracks for one field in the PAL system.

The D1 format digital VTR uses either a recording tape of 19 mm in width and 13 μm in thickness for a recording tape of 19 mm in width and 16 μm in thickness. The recording tapes are available in three kinds of tape cassettes, namely, an L-size (large) tape cassette, an M-size (medium) tape cassette and an S-size (small) tape cassette. Data is recorded on these recording tapes in the foregoing format in a recording density on the order of 20.4 μm²/bit.

From these parameters, reproducing time is thirteen minutes for the S-size tape cassette with a 13 μm thick recording tape, eleven minutes for the S-size tape cassette with a 16 μm thick recording tape, forty-two minutes for the M-size tape cassette with a 13 μm thick recording tape, thirty-four minutes for the M-size tape cassette with a 16 μm thick recording tape, ninety-four minutes for the L-size tape cassette with a 13 μm thick recording tape, and seventy-six minutes for the L-size tape cassette with a 16 μm thick recording tape.

The performance of the D1 format digital VTR is sufficiently good for use as a VTR for broadcasting service in which the highest priority is given to picture quality. However, the reproducing time is only one and a half hours at the longest even if the D1 format digital VTR uses an L-size tape cassette with a 19 mm wide recording tape, and hence the D1 format digital VTR is quite unsatisfactory for use as a domestic VTR in respect of reproducing time.

On the other hand, if signals of the shortest wavelength of 0.5 μm is to be recorded in a track of, for example, a track width of 5 μm, the signals can be recorded in a recording density of 1.25 μm²/bit. Therefore, recording or reproducting operation of a sufficiently long time is possible by such a recording method even if a narrow recording tape of a width of 8 mm or less if the method is used in combination with a compression-coding method capable of compressing data without entailing distortion.

However, when the recording density is as high as 1.25 μm²/bit, bit error rate in reproducing data from a recording tape increases greatly. "IEEE Transactions on Consumer Electronics", vol 35, no. 3, 1989, p. 421 - 427, discloses a magnetic recording medium which is suitable for digital recording. The recording medium is produced by the oblique deposition technique and has a surface roughness of about 0.003 $\mu$m and a thickness of the magnetic layer of 0.2 $\mu$m.

It is the object of the present invention to provide a magnetic recording medium having excellent magnetic characteristics and electromagnetic conversion characteristics and being suitable for recording with high density and low error of the recorded and reproduced signals. Said signals may be analog signals but they are preferably digital signals.

The conventional magnetic recording medium widely used in the field of magnetic recording is a so-called coated magnetic recording medium formed by coating the surface of a nonmagnetic base of polyester or polyethylene terephthalate (PET) with magnetic coating material produced by dispersing magnetic alloy powder containing, as principal components, a magnetic oxide, such as ferrite or chromium oxide, or Fe, Co or Ni in a binder of an organic polymer.

Magnetic recording media of a so-called evaporated film type have been proposed to deal with demand for high-density magnetic recording. The magnetic recording medium of an evaporated film type is fabricated by directly forming a magnetic metal thin film of magnetic material, such as a metal or a Co-Ni alloy, by a plating process or a vacuum thin film forming process, such as vacuum evaporation, sputtering or ion-plating, on a nonmagnetic base, such as a polyester film. The magnetic recording medium of an evaporated film type has advantages that coercive force, rectangularity ratio and electromagnetic conversion characteristics in a short wavelength region are excellent, recording demagnetization and thickness loss in reproducing recorded data are very small because the magnetic layer can be formed in a small thickness, and the density of the magnetic material in the magnetic layer is high because the magnetic layer does not contain any binder.

A manufacturing process for forming the above magnetic metal thin film of the magnetic recording medium or an evaporated film type by vacuum evaporation is simple, does not need waste liquid disposal and is capable of forming the films at a high deposition rate. Hence this process was assumed to be practically very satisfactory. In most cases, the magnetic layer of the conventional magnetic recording medium of an evaporated film type comprises a single Co-Ni film. In forming the magnetic layer of the magnetic metal thin film by vacuum evaporation, oxygen gas is supplied together with a source gas to form the Co-Ni film of fine particles of the Co-Ni alloy.

Although the particle size of the Co-Ni film is reduced if the oxygen gas supply rate is increased, the saturation magnetization is reduced to deteriorate the output characteristics of the magnetic recording medium. Accordingly, oxygen gas must be supplied at an optimum supply rate so that satisfactory magnetic characteristics are maintained and, at the same time, the electromagnetic conversion characteristics are improved.

It is recognized that a magnetic layer of a magnetically discontinuous multilayer construction is more desirable than a magnetic layer of a single layer construction to improve the electromagnetic conversion characteristics. For example, Japanese Patent Laid-open No. Sho 57-133519 discloses a multilayer magnetic layer consisting of two or more evaporated magnetic thin films of an inclined columnar construction. If a nonmagnetic film of an oxide or a nitride is interposed between the adjacent evaporated magnetic thin films the electromagnetic conversion characteristics can further be improved.

However, the magnetic characteristics and electromagnetic conversion characteristics of a magnetic recording medium having a magnetic layer of a multilayer construction formed by laminating evaporated magnetic thin films are not sufficiently satisfactory.

Means for solving the problem and achieving the above objects are now described.

In a first aspect of the present invention, a magnetic recording medium comprises a nonmagnetic base, and a recording layer comprising a plurality of ferromagnetic metal thin films, and a nonmagnetic intermediate film formed between the adjacent ferromagnetic metal thin films, wherein the nonmagnetic intermediate film is formed of an oxide, and the total thickness of the nonmagnetic intermediate films is 20% of the thickness of the recording layer or less.

In a second aspect, a magnetic recording medium comprises a nonmagnetic base, and a ferromagnetic metal thin film formed on the nonmagnetic base by vacuum evaporation, wherein the range of variation of the incidence angle of vapor streams on the moving nonmagnetic base in forming the ferromagnetic metal thin film by vacuum evaporation is 30° to 70°, but preferably 40° to 70°.

In a third aspect, a magnetic recording medium comprises a nonmagnetic base, and a recording layer formed on the nonmagnetic base and comprising a plurality of ferromagnetic metal thin films, and a nonmagnetic intermediate film formed between the adjacent ferromagnetic metal thin films, wherein the nonmagnetic intermediate film is formed of an oxide, the total thickness of the nonmagnetic intermediate film is 30%, preferably 20%, of the thickness of the magnetic layer or less, and the range of variation of the incidence angle of vapor streams on the moving nonmagnetic base in forming the ferromagnetic metal thin films by vacuum evaporation is 30° to 70°, preferably 40° to 70°.

In a forth aspect of the present invention, a method of magnetically recording digital picture signals comprises converting an input digital picture signal into block data consisting of a plurality of picture element data, compression-coding the plurality of picture element data, channel-coding the compression-coded data, and recording the channel-coded data on a magnetic recording medium with a magnetic head mounted on a rotary drum, wherein the magnetic recording medium is constructed by forming a magnetic layer on a nonmagnetic substrate by alternately laminating a plurality of magnetic metal thin films and intermediate layers of an oxide, and the energy product of the magnetic layer equal to the product of the remanent magnetic flux density, thickness and coercive force of the magnetic layer is 8 x $10^{-3}$ T x A (100 G x cm x Oe) or above.

According to a preferred embodiment of the present invention, the magnetic metal thin films are formed on the substrate by metal evaporation in which the incidence angle of metal particles is in the range of 40° to 70°.

According to another preferred embodiment of the present invention, a method of magnetically recording digital picture signals comprises converting an input digital picture signal into block data consisting of a plurality of picture element data, compression-coding the plurality of picture element data, channel-coding the compression-coded data, and recording the channel-coded data on a magnetic recording medium with a magnetic head mounted on a rotary drum, wherein the magnetic recording medium is constructed by forming a single or a plurality of magnetic layers on a nonmagnetic substrate by metal evaporation in which the incidence angle of metal particles is in the range of 40° to 70°, and the energy product of the magnetic layer equal to the product of the remanent magnetic flux density, thickness and coercive force of the magnetic layer is 8 x $10^{-3}$ T x A (100 G x cm x Oe) or above.

The average surface roughness $R_a$ of the magnetic layer of the magnetic recording medium along the center line is 3 nm (30 Å) or below.

In accordance with the invention, the magnetic recording medium has the recording layer consisting of two or more laminate ferromagnetic metal thin films, and a nonmagnetic intermediate film interposed between the adjacent ferromagnetic metal thin films. The recording layer having two ferromagnetic metal thin films is provided with only one nonmagnetic intermediate film. The recording layer having n layers of ferromagnetic metal thin films is provided with n-1 layers of nonmagnetic intermediate films. The nonmagnetic intermediate films suppresses magnetic mutual actions between the ferromagnetic metal thin films and reduces noise.

The nonmagnetic intermediate film is formed on an oxide, such as an oxide of Cr, Si, Al, Mn, Bi, Ti, Sn, Pb, In, Zn or Cu, or a composite oxide of those metals. The total thickness of the nonmagnetic intermediate films is 20% of the thickness of the recording layer or less. If the total thickness of the nonmagnetic intermediate films exceeds 20% of the thickness of the recording layer, it is difficult to improve electromagnetic conversion characteristics particularly in a short wavelength region. Preferably, the thickness of each film is not greater than about 30 nm (300 Å). If the thickness of the nonmagnetic intermediate film exceeds 30 nm (300 Å), it is possible that the detection of signals recorded in the underlying ferromagnetic metal thin film is difficult.

In accordance with the invention, the ferromagnetic metal thin films are formed by a vacuum thin film forming process, such as a vacuum evaporation process, a sputtering process or an ion-plating process. The vacuum evaporation process is particularly effective. The vacuum evaporation process may be an ordinary vacuum evaporation process or a vacuum evaporation process that ionizes and accelerates vapor streams with an electric field, a magnetic field or electron beams to form a thin film on a nonmagnetic base in an atmosphere where the mean free path of evaporated particles is large.

In accordance with the invention, the vacuum thin film forming process is used typically for oblique deposition.

In oblique deposition, vapor streams of a magnetic metal fall on the nonmagnetic base at a predetermined incidence angle with respect to the normal to the nonmagnetic base to deposit a magnetic thin film over the nonmagnetic base.

The magnetic recording medium constructed by forming a magnetic layer consisting of alternate layers of the plurality of magnetic metal thin films and the intermediate layers of an oxide formed on the non-magnetic substrate, and having an energy product, i.e., the product of the remanent magnetic flux density, thickness and coercive force of the magnetic layer, of 8 x $10^{-3}$ T x A (100 G x cm x Oe) or above reduces bit error rate before the correction of errors in the reproduced digital image signal to 1 x $10^{-4}$ or below even if the data recording density is as high as 1 $\mu m^2$/bit.

Particularly, depositing metal particles at an incidence angle in the range of 40° to 70° on the nonmagnetic substrate in forming the magnetic metal thin films reduces grain size of the magnetic layer, which further reduces bit error rate.

Since the grain size of the magnetic layer formed on the nonmagnetic substrate by forming a single or a plurality of magnetic metal thin films by metal evaporation in which metal particles are deposited on the nonmagnetic substrate at an incidence angle in the range of 40° to 70° is small enough, the magnetic layer has a high grain density. Such a high grain density and the energy product of 8 x $10^{-3}$ T x A (100 G x cm x Oe) or above reduces bit error rate before the correction of errors in the reproduced digital video signals to 1 x $10^{-4}$ or below even if data recording density is as high as 1 $\mu m^2$/bit.

A method of magnetically recording digital picture signals in a preferred embodiment according to the present invention will be described hereinafter in the following sequence.

    a. Signal Processing Unit
    b. Block Coding
    c. Channel Encoder and Channel Decoder
    d. Magnetic Head/Recording Tape System
    e. Electromagnetic Conversion System, i.e. the magnetic recording medium.

a. Signal Processing Unit

First, a signal processing unit of a digital VTR for carrying out a method in a preferred embodiment according to the present invention will be described.

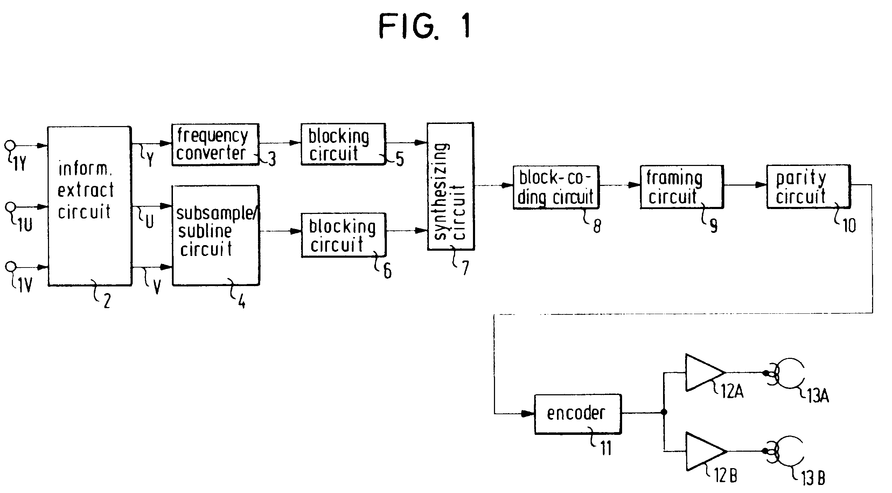

Fig. 1 shows the general construction of the recording system of the signal processing unit. A color video camera applies a digital luminance signal Y consisting of R, G and B chrominance signals, and digital color difference signals U and V respectively to input terminals 1Y, 1U and 1V. The clock rate of each signal is equal to the frequency of each component signal of the D1 format; that is, sampling frequencies for the signals are 13.5 MHz, 6.7 MHz and 6.7 MHz, respectively. Each sample has eight bits. Accordingly, the bit rate of the signals applied to the input terminals 1Y, 1U and 1V is about 216 Mbps. An effective information extract circuit 2 removes data for blanking intervals from the signals to extract only the data of an effective area of picture to compress the bit rate to about 167 Mbps. The effective information extract circuit 2 gives the luminance signal Y to a frequency converter 3. The frequency converter 3 changes the sampling frequency to 13.5 x (3/4) MHz. The frequency converter 3 employs, for example, a thinning filter to prevent reflected distortion. The output signal of the frequency converter 3 is given to a blocking circuit 5. The blocking circuit 5 rearranges the luminance data in the sequence of blocks. The blocking circuit 5 is provided for a block-coding circuit 8.

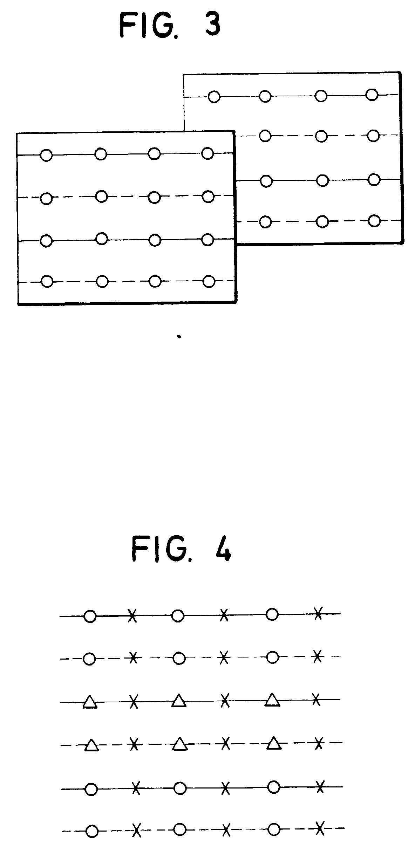

Fig. 3 shows the construction of a unit block for coding. The unit block is a three-dimensional block. A plurality of unit blocks each of 4 lines x 4 picture elements x 2 frames as shown in Fig. 3 are formed by dividing a picture spreading over two frames. In Fig. 3, continuous lines indicate lines of odd fields, and broken lines indicate lines of even fields.

The effective information extract circuit 2 gives the two color difference signals U and V to a subsample/subline circuit 4. The subsample/subline circuit 4 changes the sampling frequencies to 6.75 x (1/2) MHz and selects the two digital color difference signals alternately for each line to compose the data of one channel. Accordingly, the subsample/subline circuit 4 provides line sequence digital color difference signals. Fig. 4 shows the construction of the picture elements of a signal subsampled and sublined by the subsample/subline circuit 4. In Fig. 4, blank circles indicate the sampling picture elements of the first color difference signal U, blank triangles indicate the sampling picture elements of the second color difference signal V, and crosses indicate the positions of picture elements omitted by subsampling.

The line sequence output signal of the subsample/subline circuit 4 is given to a blocking circuit 6. The blocking circuit 6, similarly to the blocking circuit 5, converts the color difference data of the scanning sequence of a television signal into data of block sequence. The blocking circuit 6, similarly to the blocking circuit 5, blocks the color difference data in blocks each of 4 lines x 4 picture elements x 2 frames. The output signals of the blocking circuits 5 and 6 are given to a synthesizing circuit 7.

The synthesizing circuit 7 converts the luminance signal and the color difference signals arranged in the block sequence into the data of one channel. The output signal of the synthesizing circuit 7 is given to a block coding circuit 8. The block coding circuit 8 is a coding circuit (ADRC) suitable for the dynamic range of each block or a DCT circuit. The output signal of the block coding circuit 8 is given to a framing circuit 9. The framing circuit 9 converts the output signal of the block coding circuit 8 into data of frame construction. The framing circuit 9 exchanges the clock of the picture system and that of the recording system.

The output signal of the framing circuit 9 is given to a parity generating circuit 10 for generating the parity of an error-correcting code. The parity generating circuit 10 generates the parity of an error-correcting code. The output signal of the parity generating circuit 10 is given to a channel encoder 11 for channel-coding to reduce the low-frequency portion of the recording data. The output signal of the channel encoder 11 is given through recording amplifiers 12A and 12B and a rotary transformer, not shown, to magnetic heads 13A and 13B, and the output signal is recorded on a magnetic tape.

An audio signal is subjected to compression-coding and the compression-coded audio signal is given to a channel encoder.

Thus, the signal processing extracts only the data for the effective scanning intervals to reduce the bit rate of 216 Mbps of the input data to about 167 Mbps. The bit rate is further reduced to 84 Mbps by frequency conversion, subsampling and sublining. The data is compressed to data of about 25 Mbps by compression-coding by the block coding circuit 8, and additional information including the parity and the audio signal is added to the compressed data to provide recording data of a bit rate on the order of 31.56 Mbps.

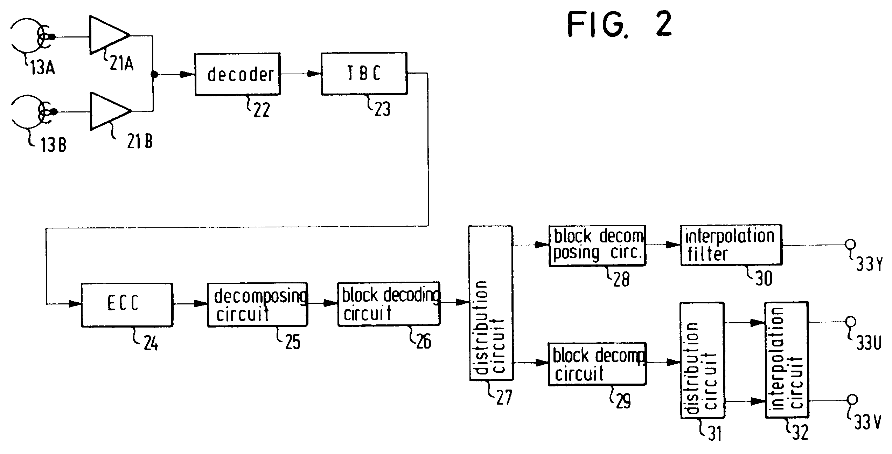

The construction of the reproducing system will be described hereinafter with reference to Fig. 2.

Referring to Fig. 2, the data reproduced by the magnetic heads 13A and 13B is given through a rotary transformer, not shown, and reproducing amplifiers 21A and 21B to a channel decoder 22. The channel decoder 22 decodes the reproduced data and gives the decoded data to a TBC circuit (time-base correcting circuit) 23. The TBC circuit 23 removes time-base variations from the reproduced data. The reproduced data provided by the TBC circuit 23 is given to an ECC circuit 24 for error correction using an error-correcting code. The output signal of the ECC circuit 24 is given to a frame decomposing circuit 25.

The frame decomposing circuit 25 separates the components of the block-coded data and the clock of the recording system is changed for the clock of the picture system. The data separated by the frame decomposing circuit 25 are given to a block decoding circuit 26. The block decoding circuit 26 reconstructs each block to provide decoded data corresponding to the original data. The decoded data is given to a distribution circuit 27. The distribution circuit 27 divides the decoded data into the luminance signal and the color difference signals. The luminance signal and the color difference signals are given to block decomposing circuits 28 and 29, respectively. The block decomposing circuits 28 and 29 convert the decoded data of the block sequence into the decoded data of the raster scanning sequence.

The block decomposing circuit 28 gives the decoded luminance signal to an interpolation filter 30. The interpolation filter 30 changes the luminance signal sampling rate from $3f_s$ to $4f_s$ ($= 13.5$ MHz). A digital luminance signal Y provided by the interpolation filter 30 appears at an output terminal 33Y.

The block decomposing circuit 29 gives digital color difference signals to a distribution circuit 31. The distribution circuit 31 separates the line-sequence digital color difference signals U and V. The digital color difference signals U and V are given to an interpolation circuit 32 for interpolation. The interpolation circuit 32 interpolates the data of the thinned lines and picture elements by using the reconstructed picture element data. The interpolation circuit 32 provides the digital color difference signals U and V of a sampling rate of $4f_s$. The digital color difference signals U and V appear at output terminals 33U and 33V, respectively.

b. Block Coding

The block-coding circuit 8 of Fig. 1 is the ADRC (Adaptive Dynamic Range Coding) encoder disclosed in Japanese Patent Application Nos. Sho 59-266407 and Sho 59-269866 filed previously by the applicant of the present patent application. The ADRC encoder detects the maximum MAX and the minimum MIN among a plurality of picture element data included in each block, determines the dynamic range DR of the block from the maximum MAX and the minimum MIN, performs coding operation suitable for the dynamic range DR and performs requantization by using picture element data having bits less than those of original picture element data. The block-coding circuit 8 may be a circuit that transforms the picture element data of each block by DCT (discrete cosine transform), quantizes coefficient data obtained by DCT and encodes the quantized data by run length Huffman coding for compression coding.

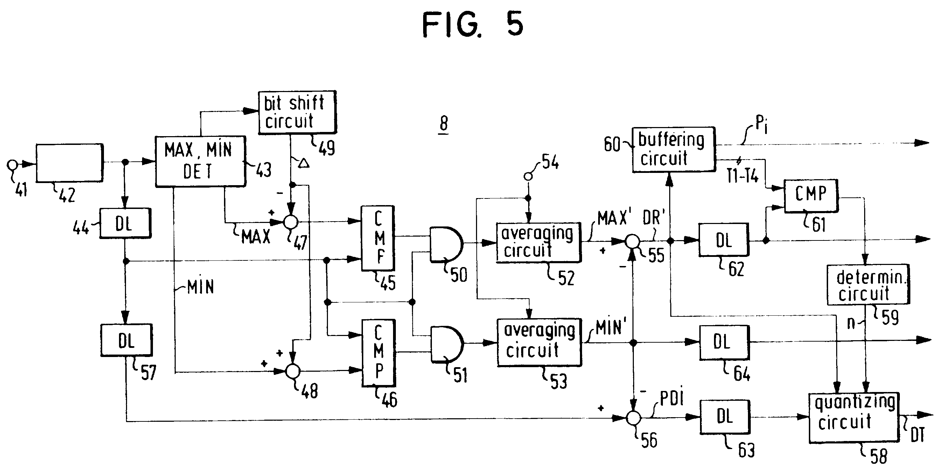

An encoder employing the ADRC encoder and capable of preventing the deterioration of picture quality even in case of multidubbing will be described with reference to Fig. 5.

Referring to Fig. 5, the synthesizing circuit 7 of Fig. 1 applies a digital video signal (or a digital color difference signal of 8 bit samples to an input terminal 41.

The blocked data is given from the input terminal 41 to a maximum/minimum detecting circuit 43 and a delay circuit 44. The maximum/minimum detecting circuit 43 detects the maximum MAX and the minimum MIN of each block. The delay circuit 44 delays the input data for a time required for the detection of the maximum and the minimum. The delay circuit 44 gives picture element data to comparators 45 and 46.

The maximum/minimum detecting circuit 43 gives the maximum MAX and the minimum MIN respectively to a subtraction circuit 47 and an addition circuit 48. A bit shift circuit 49 gives one quantization step width ($\Delta = (1/16)$DR) for 4-bit fixed length nonedge matching quantization to the subtraction circuit 47 and the addition circuit 48. The bit shift circuit 49 shifts the dynamic range DR by four bits for division of 1/16. The subtraction circuit 47 provides a threshold (MAX $-\Delta$), and the addition circuit 48 provides a threshold (MIN $+\Delta$). The thresholds are given respectively to comparators 45 and 46.

The value of $\Delta$ for determining the thresholds may be a fixed value corresponding to noise level instead of the quantization step width.

The output signal of the comparator 45 is applied to an AND gate 50, and the output signal of the comparator 46 is applied to an AND gate 51. An input data provided by the delay circuit 44 is applied to the AND gates 50 and 51. The output signal of the comparator 45 goes HIGH when the input data is greater than the threshold. Accordingly, the picture element data of the input data in a maximum level range of MAX and MAX-$\Delta$ appears at the output terminal of the AND gate 50. The output signal of the comparator 46 goes HIGH when the input data is smaller than the threshold. Accordingly, the picture element data of the input data in the minimum level range of MIN and MIN+ appears at the output terminal of the AND gate 51.

The output signal of the AND gate 50 is given to an averaging circuit 52, and the output signal of the AND gate 51 is given to an averaging circuit 53. The averaging circuits 52 and 53 calculates the average of each block. A block period reset signal is applied through a terminal 54 to the averaging circuit 42 and 53. The averaging circuit 52 provides the average MAX' of the picture element data in the maximum level range of MAX and MAX-$\Delta$, and the averaging circuit 53 provides the average MIN' of the picture element data in the minimum level range of MIN and MIN+$\Delta$. A subtraction circuit 44 subtracts the average MIN' from the average MAX' to provide a dynamic range DR'.

A subtraction circuit 56 subtracts the average MIN' from an input data given thereto through a delay circuit 57 to provide data PDI. The data PDI and the corrected dynamic range DR' are given to a quantization circuit 58. In this embodiment, the coding is variable range ADRC in which the number n of bits allocated to quantization is 0, 1, 2, 3 or 4 and edge matching quantization is performed. The number n of bits allocated to quantization is determined for each block by a bit number determining circuit 59. Data representing the number n of bits is given to the quantization circuit 58.

In variable range ADRC, the number n of bits is reduced for a block having a small dynamic range DR' and is increased for a block having a large dynamic range DR' for efficient coding. Suppose that T1 to T4 (T1 < T2 < T3 < T4) are thresholds for determining the number n of bits. Then, any code signal is transferred and only information about the dynamic range DR' is transferred for a block meeting DR' < T1, n = 1 for a block meeting T1 $\leqq$ DR' < T2, n = 2 for a block meeting T2 $\leqq$ DR' < T3, n = 3 for a block meeting T3 $\leqq$ DR' < T4, and n = 4 for a block meeting DR' $\geqq$ T4.

Thus, in the variable range ADRC, the quantity of information can be controlled (buffered) by varying the thresholds T1 to T4. Accordingly, variable range ADRC is applicable to a transmission line requiring limiting the quantity of information for one field or one frame to a predetermined value, such as the digital VTR of the present invention.

Referring to Fig. 5, a buffering circuit 60 determines the thresholds T1 to T4 to limit the quantity of information to a predetermined value. The buffering circuit 60 has a plurality of sets, for example, thirty-two sets, of thresholds T1, T2, T3 and T4. The sets of thresholds are identified by parameter codes $P_i$ (i = 0, 1, 2, ..., and 31). The quantity of information decreases monotonously with the suffix i. The picture quality of the reconstructed picture deteriorates with the reduction of the quantity of information.

The buffering circuit 60 gives the thresholds T1 to T4 to a comparator 61, and the dynamic range DR' is given through a delay circuit 62 to the comparator 61. The delay circuit 62 delays the dynamic range DR' for a time necessary for the buffering circuit 60 to determine the set of thresholds. The comparator 61 compares the dynamic range DR' of the block and the thresholds. The output of the comparator 61 is given to a bit number determining circuit 59 to determine the number n of bits to be allocated to the block. The quantizing circuit 58 converts the data PDI given thereto through the delay circuit 63 into a code signal DT by edge matching quantization using the dynamic range DR' and the allocated number n of bits. The quantizing circuit 58 is, for example, a ROM.

A corrected dynamic range DR' and the average MIN' are provided respectively through the delay circuits 62 and 64. A code signal DT and a parameter code $P_i$ indicating the set of thresholds are provided. In this embodiment, the deterioration of picture quality due to dubbing is insignificant because the nonedge matching quantized signal is edge matching quantized on the basis of dynamic range information.

c. Channel Encoder and Channel Decoder

The general construction of the channel encoder 11 and the channel decoder 22 shown in Fig. 1 will be described hereinafter with reference to Figs. 6 and 7. The construction of the channel encoder 11 and the channel decoder 22 are described concretely in Japanese Patent Application No. Hei 1-143491 filed by the applicant of the present patent application.

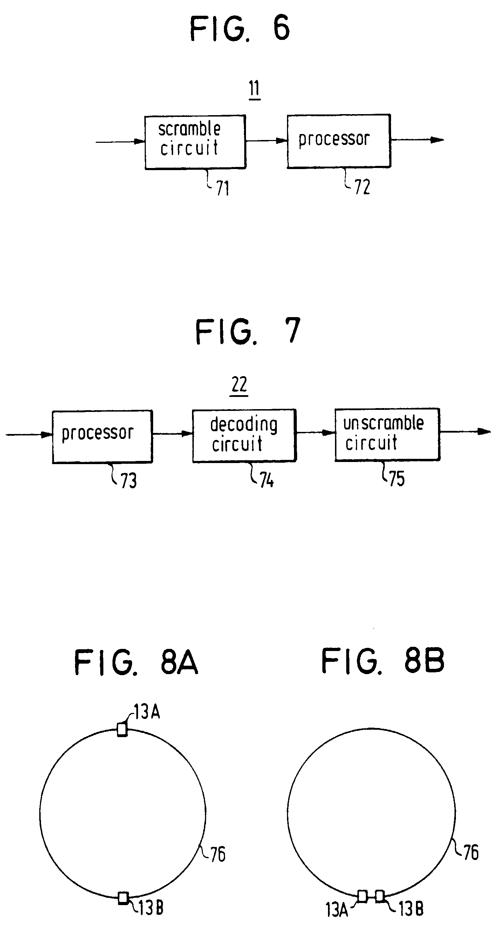

Referring to Fig. 6, an adaptive scramble Circuit 71 for receiving the output of the parity generating circuit 10 shown in Fig. 1 has a plurality of M series scramble circuits. The M series scramble circuit that provides an output having the least high-frequency component and the least dc components is selected. A precoder 72 for partial response class 4 detection system performs operation for $1/(1 - D^2)$ (D is a unit delay circuit). The output of the precoder is applied through the recording amplifiers 12A and 12B to the magnetic heads 13A and 13B for recording and reproducing, and reproduced output is amplified by the reproducing amplifiers 21A and 21B.

Referring to Fig. 7 showing the construction of the channel decoder 22, a partial response class 4 processor 73 for the reproducing system performs 1+D operation for the outputs of the reproducing amplifiers 21A and 21B. A Viterbi decoding circuit 74 operates the output of the processor 73 for decoding unaffected by noise on the basis of the correlation and probability of data. The output of the Viterbi decoding circuit 74 is given to an unscrambling circuit 75 to reconstruct the original data scrambled by the recording system. The employment of the Viterbi circuit 74 improves the reproducing C/N by 3 dB as compared with bit decoding.

d. Magnetic Head/Recording Tape System

The magnetic heads 13A and 13B are mounted on a rotary drum 76 in a diametrical head arrangement as shown in Fig. 8A or in a double azimuth arrangement as shown in Fig. 8B. A magnetic tape, not shown, is wound helically on the circumference of the rotary drum 76 in an angular range slightly greater than or slightly smaller than 180°. In the magnetic head arrangement shown in Fig. 8A, the magnetic heads 13A and 13B engage the magnetic tape substantially alternately. In the magnetic head arrangement shown in Fig. 8B, the magnetic heads 13A and 13B scan the magnetic tape simultaneously.

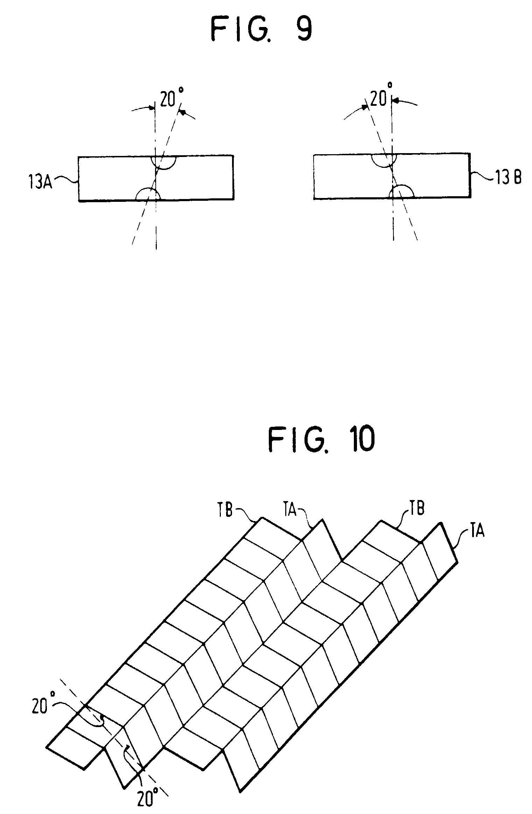

The respective azimuth angles of the magnetic heads 13A and 13B are different from each other. For example, as shown in Fig. 9, the azimuth angle of the magnetic head 13A is +20° and that of the magnetic head 13B is -20°. Accordingly, data is recorded on the magnetic tape in a recording pattern as shown in Fig. 10. As is obvious from Fig. 10, the adjacent tracks TA and TB on the magnetic tape are formed by the magnetic heads 13A and 13B differing from each other in azimuth angle. Accordingly, cross talk between the adjacent tracks can be reduced by azimuth loss during reproducing operation.

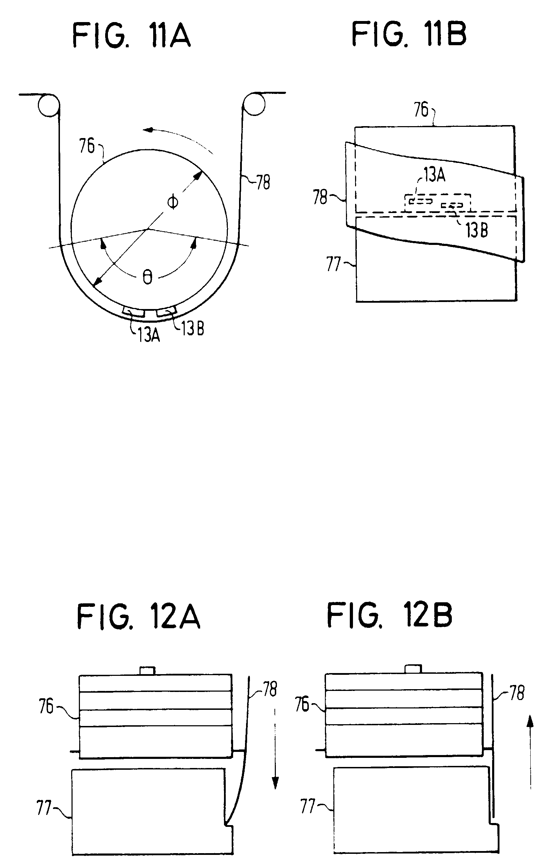

Figs. 11A and 11B show more concretely the magnetic heads 13A and 13B mounted on the rotary drum in a double azimuth arrangement. For example, the magnetic heads 13A and 13B are mounted in a double azimuth arrangement on an upper drum 76 to be rotated at a high rotating speed as high as 150 rps (NTSC system). A lower drum 77 is fixed. Accordingly, the data of one field is recorded on five tracks on a magnetic tape 78. This segment system reduces the length of the tracks and reduces errors in the linearity of the tracks. The contact angle $\theta$ of the magnetic tape 78 is, for example, 166° and the diameter of the drums is 16.5 mm.

The magnetic heads in a double azimuth head arrangement is used for simultaneous recording. Usually, errors occur in the linearity of the tracks due to the vibration of the magnetic tape 78 attributable to the eccentricity of the rotating member of the upper drum 76. The magnetic tape 78 is pressed downward as shown in Fig. 12A and the magnetic tape 78 is pulled upward as shown in Fig. 12B, causing the magnetic tape 78 to vibrate, so that the linearity of the tracks is spoiled. However, the use of the magnetic heads in a double azimuth head arrangement for simultaneous recording, as compared with the use of the two magnetic heads in a diametrical head arrangement, the error in the linearity is small. Furthermore, since the distance between the magnetic heads arranged in a double azimuth head arrangement is small, accurate pairing adjustment is possible. This magnetic head/recording tape system is capable of recording data on and reproducing data from narrow tracks.

e. Electromagnetic Conversion System, i.e. the Magnetic Medium

An electromagnetic conversion system employed in the present invention will be described.

The magnetic tape (ME tape), i.e., a recording medium, is fabricated by the following methods.

First Method

An emulsion containing, as a principal component, an acrylic ester latex is spread over a base formed of a polyethylene terephthalate (PET) film of 10 μm in thickness, and then the emulsion is dried to form minute projections by the fine particles over one major surface of the base. The base contains as a filler $SiO_2$, $TiO_2$ or $Al_2O_3$.

Then, a magnetic layer consisting of a lower magnetic metal thin film, an intermediate oxide film and an upper magnetic metal thin film is formed on the base by the following process.

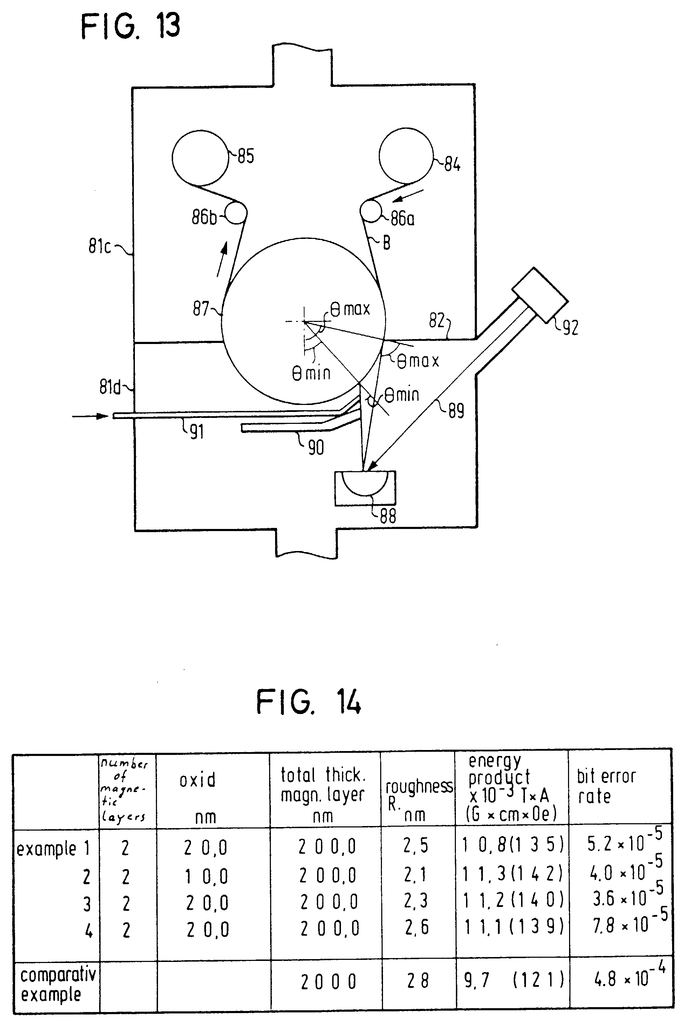

An oblique deposition film forming process for forming a ferromagnetic metal thin film will be described hereinafter. For example, as shown in Fig. 13, a nonmagnetic base B is wound around the outer circumference of a drum. The nonmagnetic base B is moved in the direction of the arrow a while vapor streams produced by evaporating an evaporation source contained in a crucible 88 fall on the nonmagnetic base at an incidence angle with respect to the normal to the nonmagnetic base B to deposit the ferromagnetic material on the nonmagnetic base. A shutter having an opening corresponding to the range of the minimum incidence angle $\theta_{min}$ to the maximum incidence angle $\theta_{max}$ is disposed so that part of the nonmagnetic base is exposed. At the start of vapor deposition, the vapor streams fall on the nonmagnetic base at the maximum incidence angle $\theta_{max}$. The incidence angle varies continuously as the nonmagnetic base 12 is moved in the direction of the arrow a and fall on the nonmagnetic base 12 at the minimum incidence angle $\theta_{min}$ at the end of vapor deposition. Thus, a ferromagnetic metal thin film 15 is formed on the nonmagnetic base 12.

The range of incidence angle is 30° to 70° but preferably 40° to 70°. If the incidence angle is greater than 70°, evaporation efficiency decreases and in-plane magnetization component increases. If the incidence angle is smaller than $\theta_{min}$, the grain size of the ferromagnetic metal thin film increases excessively and it is impossible to secure satisfactory magnetic characteristics.

The two or more ferromagnetic metal thin films can be formed by repeating such an oblique deposition cycle.

The ferromagnetic metal thin film formed by oblique deposition has a curved inclined columnar construction. The respective directions of growth of the inclined columnar structures of the adjacent ferromagnetic metal thin films may be the same (equal directions) with respect to the normal to the nonmagnetic base or may be inverse with respect to the normal to the nonmagnetic base.

There is not any particular restriction on the metallic material for forming the ferromagnetic metal thin films in accordance with the present invention; the ferromagnetic metal thin films may be formed of any known ferromagnetic metal, such as Co, Co-Cr, Co-Ni, Co-Fe-Ni or Co-Ni-Cr. Preferably, the thickness of the ferromagnetic metal thin films is in the range of about 60 nm (600 Å) to about 120 nm (1200 Å). Ferromagnetic metal thin films of a thickness smaller than the lower limit of the thickness range reduces the output characteristics, and those of a thickness greater than the upper limit of the thickness range increases noise.

The nonmagnetic base may be any one of nonmagnetic bases for this kind of magnetic recording media.

Furthermore, in accordance with the present invention, the nonmagnetic base of the magnetic recording medium may be coated with a base film, and the magnetic recording medium may be provided with a back coating film or a top coating film if necessary. The back coating film and the top coating film may be formed by ordinary processes applied to the magnetic recording medium of this kind.

Function

In accordance with the first aspect of the invention, the nonmagnetic intermediate film interposed between the adjacent ferromagnetic metal thin films formed on the nonmagnetic base prevents the magnetic interactions between the adjacent ferromagnetic metal thin films and suppresses noise. The total thickness of the nonmagnetic intermediate films not greater than 20% of the thickness of the recording layer secures satisfactory electromagnetic conversion characteristics particularly in a short wavelength region.

In accordance with the second aspect of the invention, the nonmagnetic base is moved in forming the ferromagnetic metal thin film on the nonmagnetic base by a vacuum evaporation thin film forming process to vary the incidence angle of vapor streams on the nonmagnetic base continuously in the range of 30°-40°, preferably 40° to 70° to vary the direction of growth of the ferromagnetic metal thin film; consequently, the ferromagnetic metal thin film has a curved inclined columnar structure. The magnetic layer consisting of such ferromagnetic metal thin films secures excellent magnetic characteristics and improves electromagnetic conversion characteristics.

In accordance with the third aspect of the invention, similarly to the second aspect, the incidence angle of vapor streams on the nonmagnetic base is varied in the range of 30°-40°, preferably 40° to 70° in forming the ferromagnetic metal thin film and, similarly to the first aspect, constructs the magnetic layer in a multilayer construction by forming the nonmagnetic intermediate films between the adjacent ferromagnetic metal thin films so that the total thickness of the nonmagnetic intermediate films is not greater than 20% of the thickness of the magnetic layer. Thus, the magnetic recording medium in accordance with the third aspect has the synergetic effect of the first and second aspects of the invention.

Examples

Preferred embodiments will be described hereinafter.

Example 1

A magnetic tape of Example 1 according to the first aspect of the invention is a magnetic tape of the equal two-layer construction comprising a nonmagnetic base, two ferromagnetic metal thin films formed on the nonmagnetic base by oblique deposition and having equal directions of growth of inclined columnar structure, and an intermediate oxide film formed between the ferromagnetic metal thin films.

A first ferromagnetic metal thin film of 90 nm (900 Å) in thickness is formed on the nonmagnetic base B of a polyethylene terephthalate film. The inclination of portions of the inclined columnar structure of the first ferromagnetic metal thin film nearer to the surface of the nonmagnetic base B with respect to the normal to the surface of the non-magnetic base B is greater than portions of the same farther from the surface of the nonmagnetic base.

A first intermediate oxide film of cobalt oxide having a thickness of about 20 nm (200 Å) is formed over the first ferromagnetic metal thin film.

A second ferromagnetic metal thin film of 90 nm (900 Å) in thickness is formed over the first intermediate oxide film. The direction of growth of the inclined columnar structure of the second ferromagnetic metal thin film is the same as that of the first ferromagnetic metal thin film.

The recording layer of the magnetic tape consists of the first ferromagnetic metal thin film, the first intermediate oxide film formed over the first ferromagnetic metal thin film, and the second ferromagnetic metal thin film formed over the first intermediate oxide film. The ferromagnetic metal thin films are formed in a two-layer construction. The thickness of the recording layer is 200 nm (2000 Å), and the thickness of the first intermediate oxide film 3 is 10% of the thickness of the recording layer.

A process of fabricating the magnetic tape will be described hereinafter.

In forming the first ferromagnetic metal thin film on the nonmagnetic base, the nonmagnetic base 1 was moved in one direction while an evaporation source (pure Co) was evaporated so that the incidence angle of vapor streams on the nonmagnetic base 1 varies continuously for oblique deposition.

The first intermediate oxide film was formed over the first ferromagnetic metal thin film by magnetron sputtering using pure Co as a target. During magnetron sputtering, argon gas was supplied at 200 SCCM, oxygen gas was supplied at 70 SCCM, and the nonmagnetic base was moved at 10 m/min.

The second ferromagnetic metal thin film was formed over the first intermediate oxide film by the same oblique deposition as that employed in forming the first ferromagnetic metal thin film to complete the magnetic tape.

Example 2

A magnetic tape of an equal two-layer construction of Example 2 according to the present invention was fabricated by the same process as that employed in fabricating the magnetic tape of Example 1. The magnetic tape of Example 2 has first and second ferromagnetic metal thin films of 95 nm (950 Å) in thickness, and an intermediate oxide film of 10 nm (100 Å) in thickness. The thickness of the intermediate oxide film was 5% of the thickness 200 nm (2000 Å) of the magnetic layer.

Example 3

A magnetic tape of Example 3 is of an equal three-layer construction fabricated by a process similar to that employed in fabricating the magnetic tape of Example 1. The magnetic tape has a recording layer consisting of a first ferromagnetic metal thin film formed on a nonmagnetic base, a first intermediate oxide film formed over the first ferromagnetic metal thin film, a second ferromagnetic metal thin film formed over the first intermediate oxide film, a second intermediate oxide film of 20 nm (200 Å) in thickness formed over the second ferromagnetic metal thin film, and a third ferromagnetic metal thin film formed over the second intermediate oxide film. The directions of growth of inclined columnar structures of the first, second and third ferromagnetic metal thin films are the same.

The second intermediate oxide film and the third ferromagnetic metal thin film were fabricated by the same processes as those employed in forming the first intermediate oxide film and the first ferromagnetic metal thin film of the magnetic tape of Example 1.

The ferromagnetic metal thin films were 53 nm (530 Å) in thickness, and the total thickness of the two intermediate oxide films was 20% of the thickness (200 nm) (2000 Å) of the magnetic layer.

Example 4

A magnetic tape of Example 4 is similar in construction to the magnetic tape of Example 1, except that the direction of growth of the inclined columnar structure of the second ferromagnetic metal thin film is inverse to that of the inclined columnar structure of the first ferromagnetic metal thin film.

In forming the second ferromagnetic metal thin film, the nonmagnetic base was moved in a direction reverse to that in which the nonmagnetic base was moved in forming the first ferromagnetic metal thin film.

The first intermediate oxide layer was formed in a thickness of 20 nm (200 Å), which was 10% of the thickness (200 nm) (2000 Å) of the recording layer.

Now a Comparative Example 1 is presented.

A magnetic tape of Comparative example 1 is a single layer magnetic tape having a recording layer consisting of only a first ferromagnetic metal thin film of 200 nm (2000 Å) in thickness formed on a nonmagnetic base by the process similar to that employed in fabricating the magnetic tape of Example 1.

Table 1

|  | output | C/N(dB) |
|---|---|---|
| Example 1. | +1.6 | +2.5 |
| Example 2. | +2.0 | +2.6 |
| Example 4. | +0.9 | +1.2 |
| Example 7. (described later on) | +2.1 | +2.8 |
| Comparative Example 1 | 0 | 0 |

The output characteristics and C/N ratios of the magnetic tapes thus fabricated were measured. Measured results are shown in Table 1.

In measuring the output characteristics, input signals of 0.5 μm in wavelength were recorded on the magnetic tapes and the recorded signals were reproduced by an 8 mm Video tape recorder (EVS-900, Sony Corp.). The C/N ratios were measured by recording input signals of 0.5 μm wavelength by the same 8 mm video tape recorder (EVS-900, Sony Corp.). Values shown in Table 1 are those relative to those of the magnetic tape of Comparative example 1.

As is obvious from Table 1, the output characteristics and C/N ratios of the magnetic tape in which the thickness of the intermediate oxide film is 30% of the thickness of the recording layer or less are satisfactory.

Example 5

A magnetic tape of Example 5 embodies the second aspect of the invention. The magnetic tape is of an equal two-layer construction comprising two ferromagnetic metal thin films formed on a nonmagnetic base by vacuum evaporation in which the incidence angle of vapor streams with respect to the normal to the nonmagnetic base was varied in the range of 40° to 70°. The two ferromagnetic metal thin films are the same in the direction of growth of the inclined columnar structure.

First, one major surface of a nonmagnetic base of a 10 μm thick polyethylene terephthalate film was coated with a base coat having minute irregularities in the surface by applying a base coating liquid, such as an acrylic emulsion, to the major surface. The nonmagnetic base coated with the base coat was moved in one direction while an evaporation source is evaporated so that incidence angle with respect to the normal to the nonmagnetic base of vapor streams falling on the coated surface of the nonmagnetic base varies continuously for oblique deposition. The incidence angle was the maximum incidence angle of 70° at the start of deposition, and the minimum incidence angle was 40°. A first ferromagnetic metal thin film was thus formed on the nonmagnetic base in a thickness of 100 nm (1000 Å). The evaporation source used for oblique deposition was $Co_{80}Ni_{20}$ alloy, oxygen gas was supplied at 200 SCCM into the evaporation chamber, and the nonmagnetic base was moved at 10 m/min.

Oblique deposition of the same conditions was repeated to form a second ferromagnetic metal thin film over the first ferromagnetic metal thin film. If the nonmagnetic base is moved in the same direction as that in which the nonmagnetic base was moved in forming the first ferromagnetic metal thin film, the first and second ferromagnetic metal thin films are the same in the direction of growth of the inclined columnar structure.

A back coat was formed on the other major surface of the nonmagnetic base, the second ferromagnetic metal thin film was coated with a top coat, and then the magnetic tape was completed by a predetermined rustproofing process.

Example 6

A magnetic tape of Example 6 was fabricated by the same process as that employed in fabricating the magnetic tape of Example 5, except that the maximum incidence angle was 65° and the minimum incidence angle was 45°.

Comparative Example 2

A magnetic tape of Comparative example 2 was fabricated by the same process as that employed in fabricating the magnetic tape of Example 5, except that the maximum incidence angle was 90°. The minimum incidence angle was 40°.

Table 2

|  | output (dB) | frequency characteristics (dB) |
|---|---|---|
| Example 5 | +0.5 | +2.1 |
| Example 6 | +0.7 | +2.5 |
| Comparative Example 2 | 0 | 0 |

Table 2 shows the measured output characteristics and frequency characteristics of Examples 5 and 6 and Comparative Example 2.

The output characteristics are represented by measured reproduced output signals relative to that of Comparative example 2 when input signals of 0.5 μm in wavelength recorded on the magnetic tapes were reproduced. The frequency characteristics are represented by the degree of attenuation of reproduced output signals of 10 MHz relative to attenuation of reproduced output signals of 5 MHz relative to that of Comparative Example 2. An 8 mm Video tape recorder (EVS-900, Sony Corp.) was used.

As is obvious from Table 2, the output characteristics of the magnetic tapes in accordance with the present invention are satisfactory. It was proved through the examination of the measured values with reference to those for Comparative Example 2 that the present invention suppresses the attenuation of reproduced output signals at 10 MHz relative to the reproduced output signals at 5 MHz.

Example 7

A magnetic tape of Example 7 in accordance with the present invention has a recording layer consisting of two ferromagnetic metal thin films of an equal two-layer construction, and an intermediate oxide film interposed between the ferromagnetic oxide film. The ferromagnetic metal thin films were formed by oblique deposition in which the incidence angle of vapor streams with respect to the normal on the nonmagnetic base was varied continuously in the range of 70° to 40°.

A nonmagnetic base of a 10 μm thick polyethylene terephthalate film coated with a base coat was moved in one direction at 10 m/min for the same oblique deposition process as that employed in forming the ferromagnetic metal thin film of Example 5 to form a first ferromagnetic metal thin film of 90 nm (900 Å) in thickness. During the oblique deposition process, the incidence angle was varied from the maximum incidence angle $\theta_{max}$ of 70° to the minimum incidence angle $\theta_{min}$ of 40°.

Subsequently, a 20 nm (200 Å) thick intermediate oxide film of cobalt oxide was formed over the first ferromagnetic metal thin film by the same magnetron sputtering process as that employed in forming the intermediate oxide film of Example 1.

A 90 nm (900 Å) thick second ferromagnetic metal thin film was formed over the intermediate oxide film by the same oblique deposition as that for forming the first ferromagnetic metal thin film.

A recording layer of a magnetic tape thus fabricated is of an two-layer construction consisting of the first and second ferromagnetic metal thin film formed on the nonmagnetic base, and the intermediate oxide film formed between the first and second ferromagnetic metal thin films. The thickness of the recording layer is 200 nm (2000 Å), and the thickness of the intermediate oxide film is 10% of the thickness of the recording layer.

Example 8

A magnetic tape of Example 8 was fabricated by the same process as that employed in fabricating the magnetic tape of Example 7, except that the maximum incidence angle $\theta_{max}$ was 65° and the moving speed of the nonmagnetic base was 20 m/min.

The thickness of the intermediate oxide film was 10 nm (100 Å), which was 5% of the thickness of the recording layer.

As is obvious from the characteristics of the examples the magnetic tapes having the ferromagnetic metal thin films formed by limiting the incidence angle of vapor streams on the nonmagnetic base with respect to the normal to the nonmagnetic base to the range in accordance with the present invention, such as those of Examples 7 and 8, are more excellent in output characteristics and C/N ratio than the magnetic tapes having the ferromagnetic metal thin films formed by simple oblique deposition.

As is apparent from the foregoing description, according to the first and third aspect of the invention, since the ferromagnetic metal thin films are formed in a multilayer construction and the intermediate oxide film is formed between the adjacent ferromagnetic metal thin films, noise is reduced and satisfactory electromagnetic conversion characteristics can be secured. Since the thickness of the intermediate oxide films is 20% of the thickness of the magnetic layer or less, the electromagnetic conversion characteristics particularly in the short wavelength region can be improved.

According to the second and third aspect of the invention, since the inclination of the inclined columnar structures of the ferromagnetic metal thin films of the magnetic layer is within a limit range of inclination, excellent magnetic characteristics can be secured and the electromagnetic conversion characteristics can be improved.

Now the apparatus of Fig. 13 will be described more in detail.

First, a magnetic metal thin film (of Co) is formed on the base B by a vacuum evaporation apparatus as shown in Fig. 13.

Shown in Fig. 13 are vacuum tanks 81c and 81d, a partition plate 82, a roll 84 of the base B, a take-up roller 85, guide rollers 86a and 86b, a cylindrical cooling can 87 for guiding the base B, an evaporation source 88, an electron beam 89 for heating the evaporation source 88, a shielding plate 90 for adjusting the incidence angle θ of metal particles on the base B, an oxygen gas supply pipe 91, and an electron gun 92.

The base B unwound from the roll 84 is advanced via the guide roller 86a, the cooling can 87 and the guide roller 86b, and the base B is taken up on the take-up roller 85. On the cooling can 87, a magnetic metal thin film of Co is formed by oblique deposition on the base B in an oxygen atmosphere. The thickness of the magnetic metal thin film is, for example, on the order of 90 nm (900 Å).

During vacuum evaporation, the vacuum tanks 81c and 81d are kept at a vacuum of 0.013 Pa (1 x $10^{-4}$ torr) and oxygen gas is supplied through the oxygen gas supply pipe 91 into the vacuum tanks 81c and 81d, for example, at a rate of 200 cm$^3$/min. The incidence angle of θ of metal particles on the base B is, for example, in the range of 45° ($\theta_{min}$) to 90° ($\theta_{max}$). The evaporation source 88 is a 100% Co ingot.

An intermediate oxide film, such as $Co_3O_4$ film, of a thickness on the order of 20 nm (200 Å) is formed, for example, by dc magnetron sputtering over the magnetic metal thin film of Co formed on the base B. In the dc magnetron sputtering process, a 100% Co target is used for reactive sputtering in an atmosphere of a mixed gas consisting of oxygen gas and argon gas. The distance between the target and the base B is, for example, 20 mm. The flow rate of argon gas is, for example, 200 cm$^3$/min and that of oxygen gas is, for example, 70 cm$^3$/min. The running speed of the base B is, for example, on the order of 10 m/min.

Then, a magnetic metal thin film of Co of a thickness, for example, on the order of 90 nm (900 Å) is formed over the intermediate oxide film by the vacuum evaporation apparatus shown in Fig. 13 by the same process as that explained above. Thus, a multilayer magnetic layer consisting of the lower magnetic metal thin film, the intermediate oxide film and the upper magnetic metal thin film formed one over another in that order is constructed. The thickness of the multilayer magnetic layer is, for example, on the order of 200 nm (2000 Å).

The base B coated with the multilayer magnetic layer is coated for back coating with a coating materials containing, for example, carbon and epoxy binder, and for top coating with a lubricant containing perfluoropolyether, and then the base B is cut in 8 mm thick magnetic tapes.

The characteristics of magnetic tapes thus fabricated and differing from each other in the construction of the magnetic layer and the thickness of the intermediate oxide film are shown in Fig. 14 in comparison with those of a comparative example. In Fig. 14, $R_a$ indicates the center line average roughness of the magnetic layer of the magnetic tape.

As is obvious from Fig. 14, bit error rates in the magnetic tapes in Examples 1 to 4 each having a magnetic layer constructed by sequentially depositing the lower magnetic metal thin film, the intermediate oxide film and the upper magnetic metal thin film are $1 \times 10^{-4}$ or less, where as bit error rate in the magnetic tape in the comparative example having a single-layer magnetic layer is as large as $4.8 \times 10^{-4}$, and all the magnetic tapes in Examples 1 to 4 and the comparative example meet requirements expressed by $R_a = $ nm (30 Å) and energy product $\geqq 8 \times 10^{-3}$ T x A (100 G x cm x Oe).

Ordinarily, the surface roughness of magnetic tapes is measured in accordance with JIS B0601. The surface roughness of Examples 1 to 4 and the comparative example was measured under the following conditions:

| | |
|---|---|
| Surface roughness tester: | Talistep (Ranku Teira) |
| Needle: | Square needle of 0.2 $\mu$m x 0.2 $\mu$m |
| Pressure: | 2 mg |
| Bypass filter: | 0.33 Hz. |

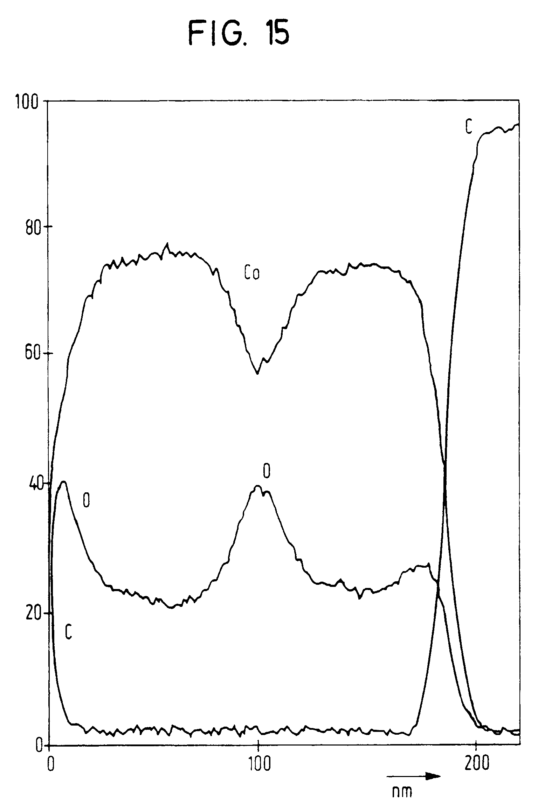

Fig. 15 shows the results of measurement of Auger profile with respect to the depth (thickness) and depth profile of the magnetic layer consisting of the lower magnetic metal thin film, the intermediate oxide film and the upper magnetic metal thin film by an Auger electron spectroscope (Jamp 30, Nippon Denshi K.K.) to confirm the composition. Incident electron acceleration voltage was 2.00 kV, the degree of vacuum was $9.0 \times 10^{-8}$ Pa, the time constant of the Auger electron analyzing System was 20 ms, etching ion acceleration voltage was 1.0 kV, and etching rate was 1.66 nm/min (16.6 Å/min).

In Fig. 15, two peaks for Co correspond to the lower and upper magnetic metal thin films, a peak for oxygen between the two peaks for Co corresponds to the intermediate oxide film between the lower and upper magnetic metal thin films. The width at half maximum of the peak for oxygen is about 30 nm (300 Å).

The relative concentration of Co is reduced in a portion of the recording layer at a deptch of 100 nm (1000 Å) from the surface, which proved that the first intermediate oxide film of cobalt oxide was formed between the first ferromagnetic metal thin film and the second ferromagnetic metal thin film. From the full width at half maximum h/2 of the oxygen atom concentration in a portion near the depth of 100 nm, the thickness of the first intermediate oxide film was about 20 nm.

Transition layers exist between the lower and upper magnetic metal films and the intermediate oxide film and the boundaries are not necessarily distinct. However, the thickness of the intermediate oxide film can be evaluated by using the width at half maximum of the peak for oxygen.

As stated above, the magnetic layer comprising the lower and upper magnetic metal thin films and the intermediate oxide film formed between the lower and upper magnetic metal thin films reduces the magnetic coupling of the magnetic layer and improves the electromagnetic conversion characteristics in a short wavelength region. Particularly, the electromagnetic conversion characteristics are satisfactory when the thickness of the intermediate oxide film is 20% of the thickness of the magnetic layer or less, and the bit error rate can be reduced.

In the magnetic tape having the magnetic layer of such a multilayer construction, the output is insufficient when the thickness of the magnetic metal thin film of Co is smaller than 60 nm (600 Å), and noise increases when the thickness of the same is greater than 120 nm (1200 Å). Therefore, the preferable thickness of the magnetic metal thin film of Co is in the range of 60 to 120 nm (600 to 1200 Å). A preferable thickness of the intermediate oxide film is 30 nm (300 Å) or below because it is difficult to pick up signals produced by the lower magnetic metal thin film if the thickness of the intermediate oxide film is greater than 30 nm (300 Å).

Second Method

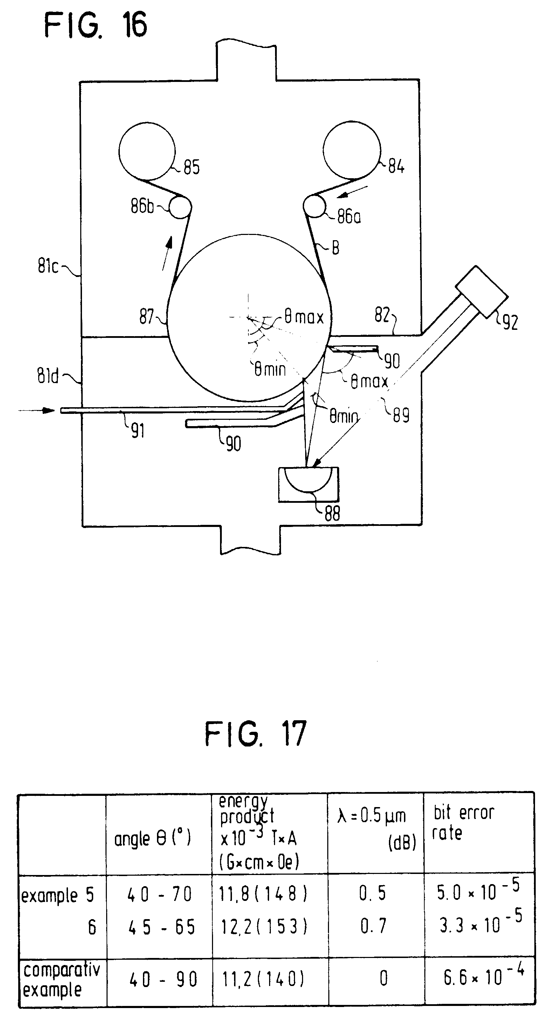

A magnetic metal thin film of Co is formed in an oxygen atmosphere by oblique deposition on a base B by using a vacuum evaporation apparatus shown in Fig. 16. The vacuum evaporation apparatus shown in Fig. 16 is different from that shown in Fig. 13 in that the incidence angle $\theta$ of evaporated metal particles on the base B is limited in a range of 40° ($\theta_{min}$) and 70° ($\theta_{max}$) by a shielding plate 90.

During vacuum evaporation, the interior of vacuum tanks 81c and 81d is maintained, for example, at a vacuum of 0.013 Pa (1 x $10^{-4}$ torr) and oxygen gas is supplied through an oxygen supply pipe 91 into the vacuum tanks 81c and 81d, for example, at a rate of 200 cm$^3$/min. The thickness of a magnetic layer consisting of the single magnetic metal thin film is, for example, 200 nm (2000 Å). An evaporation source 88 is a 100% Co ingot. When the incidence angle $\theta$ is limited to such a narrow range, deposition rate decreases. Accordingly, the running speed of the base B is regulated according to the range of the incidence angel $\theta$ so that the magnetic metal thin film is deposited at a desired deposition rate.

8 mm wide magnetic tapes are obtained by the same procedure as that employed in the first method.

Fig. 17 shows the characteristics of magnetic tapes differing from each other in the incidence angle $\theta$. As is obvious from Fig. 17, in Example 5 having the magnetic metal thin film formed by vacuum evaporation in which the incidence angle $\theta$ was limited to a range of 40° to 70°, the output is 0.5 dB for a recording wavelength $\lambda = 0.5$ μm, and the bit error rate is as small as 5.0 x $10^{-5}$. In Example 6 having the magnetic metal thin film formed by vacuum evaporation in which the incidence angle $\theta$ was limited to a narrower range of 45° to 65°, the output is 0.7 dB for $\lambda = 0.5$ μm, and the bit error rate is as small as 3.8 x $10^{-5}$. In the comparative example having the magnetic metal thin film formed by vacuum evaporation in which the incidence angle $\theta$ was in the range of 40° to 90°, the output is zero for $\lambda = 0.5$ μm, and the bit error rate is as large as 6.6 x $10^{-4}$.

The large output for $\lambda = 0.5$ μm and the small bit error rate of Examples 5 and 6 having the magnetic layer deposited by vacuum evaporation in which the incidence angle $\theta$ of evaporated metal particles on the base B is in the range of 40° to 70° or in the range of 45° to 65° are inferred to be due to the following reasons. When the incidence angle $\theta$ is limited to a value in the range of 40° to 70° or in the range of 45° to 65°, the component with respect to a direction parallel to the surface of the base B of metal particles falling on the base B is small and the grain size of the crystal grains of the magnetic layer is small, so that the density of the crystal grains in the magnetic layer is high and the ratio of carrier level to noise level (C/N) is improved, which reduces bit error rate.

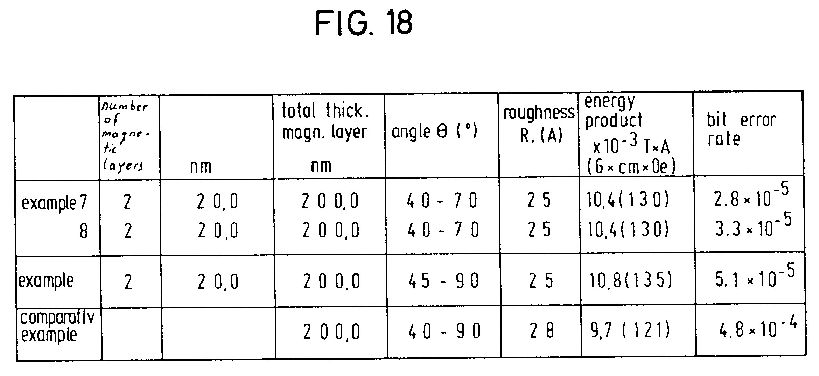

As mentioned above, the bit error rate can be reduced by limiting the range of incidence angle $\theta$ of metal particles on the base B. The limitation of the range of incidence angle $\theta$ can also be applied to forming the multilayer magnetic layer by the first method. If the range of incidence angle $\theta$ is limited to the range of 40° to 70° in carrying out the first method, the bit error rate may further be reduced. Such an effect is shown in Fig. 18.

As is obvious from Fig. 18, bit errors of Examples 7 and 8 fabricated by the first method, in which the incidence angle $\theta$ was limited to the range of 40° to 70°, are 2.8 x $10^{-5}$ and 3.3 x $10^{-5}$, respectively, which are smaller than those of Examples 1, 2, 3 and 4 shown in Fig. 14. On the other hand, the bit error rate of the comparative example having a magnetic metal thin film formed by depositing metal particles at an incidence angle $\theta$ in the range of 40° to 90° is as large as 4.8 x $10^{-4}$. A reference example shown in Fig. 18 is a magnetic tape having a multilayer magnetic layer consisting of magnetic metal thin films formed by depositing metal particles at an incidence angle $\theta$ in the range of 45° to 90°.

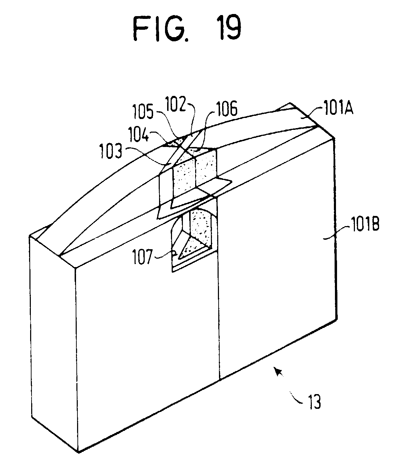

Fig. 19 shows a magnetic head employed in the present invention.

As shown in Fig. 19, the magnetic head has single crystal Mn-Zn ferrite cores 101A and 101B, and Fe-Ga-Si-Ru soft magnetic layers 102 and 103 formed by sputtering on the single crystal Mn-Zn ferrite cores 101A and 101B, respectively, with a gap 104 therebetween. Spaces on the opposite sides of the gap 104 with respect to the track width are filled up with glass 105 and 106 to limit the track width to, for example, about 4 μm. A recording coil, not shown, is provided in a hole 107. The effective gap length of the magnetic head is 0.20 μm.

Since the magnetic head has the Fe-Ga-Si-Ru soft magnetic layers 102 and 103 having a saturation magnetic flux density $B_s$ of 1.45 T (14.5 kG) near the gap 104, the magnetic head is able to record data on a magnetic tape having a high coercive force without entailing magnetic saturation.

With such an ME tape and such a magnetic head, the recording density is 1.25 μm$^2$/bit or less.

That is, signals of the shortest wavelength of 0.5 μm can be recorded on tracks of 5 μm in track width at a recording density of 1.25 μm$^2$/bit. However, since the C/N of the reproduced output deteriorates with the decrease of the track width and the recording wavelength, the foregoing magnetic tape and the magnetic head are used to suppress the deterioration.

The applicant of the present patent application fabricated a digital VTR for trial in 1988 to record signals or a short wavelength of 0.5 μm on an 8 mm wide ME tape at a track pitch of 15 μm. In recording data in and reproducing data from the ME tape, a rotary drum of 40 mm in diameter was rotated at 60 rpm. In this case, the C/N was 51 dB for a recording wavelength of 1 μm, and the bit error rate was 4 x $10^{-5}$.

If tracks of 5 μm in track width, which is used in the present invention, is used, the C/N is as small as about 44 dB and hence the picture quality will be unsatisfactory. To compensate for the deterioration of the C/N of 7 dB, the foregoing construction of the embodiment of the present invention is employed.

Generally the signal output level decreases with increase in the space between the magnetic head and the magnetic tape during recording operation and during reproducing operation, and the size of the space is dependent on the flatness of the magnetic tape. Although the flatness of a coated magnetic tape is dependent on the coating, the flatness of the ME tape is dependent on the flatness of the surface of the base. In the foregoing embodiment, it was proved experimentally that the C/N can be improved by 1 dB if a base film having the least possible surface roughness is used. The C/N was improved by 3 dB when the magnetic tape fabricated by the foregoing vacuum evaporation process using the foregoing materials as compared with the C/N when the magnetic tape used in combination with the digital VTR fabricated in 1988. Accordingly, the use of the magnetic head and the magnetic tape in accordance with the present invention will improve the C/N by 4 dB as compared with the C/N when the digital VTR and the magnetic tape fabricated for trial in 1988.

It was proved that the use of Viterbi decoding for channel decoding in the present invention improved the C/N by 3 dB as compared with bit-by-bit decoding.

Accordingly, the present invention is capable of compensating for the deterioration of the C/N of 7 dB. The bit error rate when the recording density is 1.25 $\mu m^2$/bit is equal to that of the digital VTR fabricated in 1988. As regards reproducing output, the bit error rate before the correction of the error correction code must be $10^{-4}$ or less, because errors must be correctable when an error correction code of a redundancy on the order of 20% is used.

Effect of the Invention

As is apparent from the foregoing description, according to the present invention, the bit error rate before the correction of errors in reproduced digital picture signals is $1 \times 10^{-4}$ or less even if the recording density is as high as 1 $\mu m^2$/bit.

BRIEF DESCRIPTION OF THE DRAWINGS

Fig. 1          is a block diagram of the recording system of a signal processing unit included in a digital VTR in a preferred embodiment according to the present invention.
Fig. 2          is a block diagram of the reproducing system of the signal processing unit.
Fig. 3          is a diagram of a block for block coding.
Fig. 4          is a diagram of assistance in explaining subsampling and sublining.
Fig. 5          is a block diagram of a block coding circuit.
Fig. 6          is a block diagram of a block coding circuit.
Fig. 7          is a block diagram of a channel decoder.
Figs.8A and 8B  are diagrammatic views of assistance in explaining the disposition of magnetic heads.
Fig. 9          is a diagrammatic view of assistance in explaining the azimuth of magnetic heads.
Fig. 10         is a diagrammatic view of assistance in explaining a recording pattern.
Figs.11A and 11B  are a top plan view and a side view, respectively, of a magnetic head/magnetic tape system.
Figs.12A and 12B  are diagrammatic views of assistance in explaining the vibration of a magnetic tape due to an eccentric drum.
Fig. 13         is a schematic view of assistance in explaining a process of fabricating a magnetic tape.
Fig. 14         is a table showing the characteristics of different magnetic tapes.
Fig. 15         is a graph showing the results of measurement of Auger profile of a magnetic layer consisting of a lower magnetic metal thin film, an intermediate oxide film and an upper magnetic metal thin film with respect to the depth thereof.
Fig. 16         is a schematic view of assistance in explaining a process of fabricating a magnetic tape.
Fig. 17         is a table showing the characteristics of magnetic tapes embodying the present invention.
Fig. 18         is a table showing other characteristics of magnetic tapes embodying the present invention.
Fig. 19         is a perspective view of magnetic head.

DESCRIPTION OF REFERENCE CHARACTERS

1Y    Component signal input terminal
1U    Component signal input terminal
5     Blocking circuit
6     Blocking circuit
8     Block coding circuit
11    Channel encoder
13A   Magnetic head

13B    Magnetic head
22      Channel decoder
26      Block decoding circuit
28      Block decompositing circuit
29      Block decomposing circuit
B       Base
91c    Vacuum tank
81d    Vacuum tank
87      Cooling can
88      Evaporation source
90      Shielding plate

Fig. 1

1      Effective information extract circuit
2      Frequency converter
3      Blocking circuit
4      Synthesizing circuit
5      Block encoding circuit
6      Framing circuit
7      Parity generating circuit
8      Subsample/subline circuit
9      Blocking Circuit
10     Channel encoder

Fig. 2

1    Channel decoder
2    Frame decomposing circuit
3    Block decoder
4    Distribution circuit
5    Block decomposing circuit
6    Interpolation filter
7    Block decomposing circuit
8    Distribution circuit
9    Interpolation circuit

Fig. 5

1    Blocking circuit
2    Bit shift circuit
3    Averaging circuit
4    Buffering circuit
5    Bit number determining circuit
6    Quantizing circuit

Fig. 6

1    Adaptive scramble circuit
2    Precoder

Fig. 7

1    Processor
2    Viterbi decoding circuit
3    Unscrambling circuit

Fig. 13

1   Oxygen gas

Fig. 14

1   Example
2   Comparative example
3   Construction
4   Thickness of intermediate oxide film
5   Thickness of magnetic layer
6   Energy product
7   Bit error rate
8   Equal two-layer construction
9   Inverse two-layer construction
10  Single

Fig. 15

1   Relative concentration
2   Depth

Fig. 16

1   Oxygen gas

Fig. 17

1   Incidence angle
2   Energy product
3   Output (dB) for = 0.5 $\mu$m
4   Bit error rate
5   Example
6   Comparative example

Fig. 18

1   Construction
2   Thickness of intermediate oxide film
3   Thickness of magnetic layer
4   Incidence angle
5   Energy product
6   Bit error rate
7   Example
8   Reference example
9   Comparative example
10  Equal two-layer construction
11  Inverse two-layer construction
12  Single layer

## Claims

1.  Magnetic recording medium (78) comprising:

a non magnetic film substrate (B), and
a magnetic layer formed on a major surface of said substrate (B) said magnetic layer being formed of a magnetic metal thin film deposited by a vacuum process,
said magnetic layer being formed of a plurality of elemental magnetic layer films, and
a non magnetic intermediate layer being interposed between said elemental magnetic layer films,

said non magnetic intermediate layer having a thickness not exceeding 10% of the total thickness of said magnetic layer, the surface roughness (Ra) being equal to or less than 0.003 μm,

**characterized** in that
the product of residual magnetic flux density (T), of thickness (d) and of coercive force (A/m) is equal to or larger than $8 \times 10^{-3}$ T x A (100 Gauss x cm x Oe).

2. Magnetic recording medium (78) comprising:

a non magnetic film substrate (B), and
a magnetic layer formed on a major surface of said substrate (B),
said magnetic layer being formed of a magnetic metal thin film deposited by a vacuum process,
said magnetic layer being formed by obliquely depositing magnetic material onto said substrate, and
the surface roughness (Ra) being equal to or less than 0.003 μm

**characterized** in that
said magnetic layer satisfying the following conditions:

product of residual magnetic flux density (T), of thickness (d) and of coercive form (A/m) is equal to or larger than $8 \times 10^{-3}$T x A (100 Gauss x cm x Oe), and
the magnetic layer is formed onto said substrate with an incident angle ranging 40 to 70 degree.

3. Magnetic recording medium (78) according to claim 1, characterized by
said magnetic layer being formed by obliquely depositing magnetic material onto said substrate (B) with an incident angle ranging 40 to 70 degree.

4. Magnetic recording medium (78) according claims 1 or 3, wherein said thickness of said intermediate layer is defined by full width half maximum of oxygen peak according to the Auger electron spectroscopy.

5. Magnetic recording medium (78) according to anyone of the claims 1 to 4,
characterized by,
said medium (78) being a magnetic tape wound in a cassette and having a width of no more than approximately 8 mm and a thickness of no more than approximately 7 nm.

6. Use of a magnetic recording medium (78) according to anyone of claims 1 to 5,
characterized by,
recording and reproducing of analog picture signals by at least one magnetic head (13).

7. Use of a magnetic recording medium (78) according to anyone of the claims 1 to 5,
characterized by,
magnetically recording digital picture signals, comprising:

converting an input digital picture signal into block data (Y,U,V) consisting of a plurality of picture element data,
compression-coding (3,4) the plurality of picture element data,
channel-coding (11) the compression-coded data, and
recording the channel-coded data on a magnetic recording medium (78) with at least one magnetic head (13a, 13b) mounted on a rotary drum.

8. Use of a magnetic recording medium (78) according to claim 6 or 7,
characterized in that,
each of said heads (13) has a gap defined between portions of the respective head having a saturation magnetic flux density of at least 1.4 T (14 kG).

9. Use of a magnetic recording medium (78) according to claim 6, 7 or 8,
characterized in that,
two recording heads (13A,13B) are provided for recording in adjacent tracks, and said two recording heads (13A, 13B) have gaps (104) with different azimuth angles of approximately ± 20°.

**10.** Use of a magnetic recording medium (78) according to anyone of the claims 6 to 9,
characterized by,
recording reduced data bit rate signal in successive skewed tracks on said tape medium (78) with an areal recording density of at least approximately 0.8 bit/$\mu$m$^2$.

**11.** Use of a magnetic recording medium (78) according to claim 10,
characterized in that,
said recording provides each of said skewed tracks with a width of approximately 5.0 $\mu$m.

**12.** Use of a magnetic recording medium (78) according to claim 10 or 11,
characterized in that,
said reduced data bit rate signal is recorded with a minimum wavelength of 0.5 $\mu$m.

**Patentansprüche**

**1.** Magnetisches Aufzeichnungsmedium (78) mit:

einem nicht-magnetischen Filmsubstrat (B), und
einer auf einer Hauptfläche des Substrates (B) gebildeten Magnetschicht, wobei die Magnetschicht aus einem magnetischen Metall-Dünnfilm gebildet ist, der durch einen Vakuumvorgang aufgebracht ist,
wobei die Magnetschicht aus mehreren Elementar-Magnetschichtfilmen gebildet ist, und
eine nicht-magnetische Zwischenschicht zwischen den Elementar-Magnetschichtfilmen vorgesehen ist, wobei die nicht-magnetische Zwischenschicht eine Dicke aufweist, die 10% der Gesamtdicke der Magnetschicht nicht überschreitet und die Oberflächenrauhigkeit (Ra) kleiner oder gleich 0,003 $\mu$m ist,

**dadurch gekennzeichnet**, daß das Produkt aus der Remanenz-Flußdichte (T), der Dicke (d) und der Koerzitivkraft (A/m) gleich oder größer 8 x 10$^{-3}$ T x A (100 Gauss x cm x Oe) ist.

**2.** Magnetisches Aufzeichnungsmedium (78) mit:

einem nicht-magnetischen Filmsubstrat (B), und
einer auf einer Hauptfläche des Substrates (B) gebildeten Magnetschicht, wobei die Magnetschicht aus einem magnetischen Metall-Dünnfilm gebildet ist, der durch einen Vakuum-Vorgang aufgebracht ist,
wobei die Magnetschicht durch schräges Aufbringen des magnetischen Materiales auf das Substrat gebildet ist und die Oberflächenrauhigkeit (Ra) kleiner oder gleich 0,003 $\mu$m ist,

**dadurch gekennzeichnet,** daß die Magnetschicht die folgenden Bedingungen erfüllt:

das Produkt der Remanenz-Flußdichte (T), der Dicke (d) und der Koerzitivkraft (A/m) ist größer oder gleich als 8 x 10$^{-3}$ T x A (100 Gauss x cm x Oe), und
die Magnetschicht ist auf dem Substrat mit einem Auftreffwinkel zwischen 40° und 70° gebildet.

**3.** Magnetisches Aufzeichnungsmedium (78) nach Anspruch 1,
**dadurch gekennzeichnet,** daß die Magnetschicht durch Schrägablagerung des magnetischen Materiales auf das Substrat (B) mit einem Auftreffwinkel zwischen 40° und 70° gebildet ist.

**4.** Magnetisches Aufzeichnungsmedium (78) nach einem der Ansprüche 1 oder 3,
bei dem die Dicke der Zwischenschicht durch die volle Breite des halben Maximums eines Sauerstoff-Peaks bei der Auger-Elektronenspektroskopie festgelegt ist.

**5.** Magnetisches Aufzeichnungsmedium (78) nach einem der Ansprüche 1 bis 4,
**dadurch gekennzeichnet,** daß das Medium (78) ein Magnetband ist, das in einer Kassette aufgewickelt ist und eine Breite von nicht mehr als ungefähr 8 mm und eine Dicke von nicht mehr als ungefähr 7 nm aufweist.

**6.** Verwendung eines magnetischen Aufzeichnungsmediums (78) nach einem der Ansprüche 1 bis 5,
**gekennzeichnet durch** eine Aufzeichnung und Wiedergabe von analogen Bildsignalen durch wenigstens einen Magnetkopf(13).

**7.** Verwendung eines magnetischen Aufzeichnungsmediums (78) nach einem der Ansprüche 1 bis 5, **gekennzeichnet durch** eine magnetische Aufzeichnung digitaler Bildsignale, aufweisend:

Umsetzung eines eingegebenen Digital-Bildsignales in Blockdaten (Y, U, V) bestehend aus mehreren Bildelement-Daten,
Kompressionscodierung (3, 4) der mehreren Bildelement-Daten,
Kanalcodierung (11) der kompressionscodierten Daten, und
Aufzeichnung der kanalcodierten Daten auf einem magnetischen Aufzeichnungsmedium (78) mit wenigstens einem Magnetkopf (13a, 13b), der auf einer Drehtrommel angebracht ist.

**8.** Verwendung eines magnetischen Aufzeichnungsmediums (78) nach einem der Ansprüche 6 oder 7, **dadurch gekennzeichnet**, daß jeder der Köpfe (13) einen Spalt aufweist, der zwischen Abschnitten des jeweiligen Kopfes festgelegt wird und der eine magnetische Sättigungs-Flußdichte von wenigstens 1,4 T (14 kG) aufweist.

**9.** Verwendung eines magnetischen Aufzeichnungsmediums (78) nach einem der Ansprüche 6, 7 oder 8, **dadurch gekennzeichnet,** daß zwei Aufzeichnungsköpfe (13a, 13b) zur Aufzeichnung in angrenzenden Spuren vorgesehen sind und daß die beiden Aufzeichnungsköpfe (13a, 13b) Spalte (104) mit unterschiedlichen Azimuthwinkeln von ungefähr ±20° aufweisen.

**10.** Verwendung eines magnetischen Aufzeichnungsmediums (78) nach einem der Ansprüche 6 bis 9, **gekennzeichnet durch** die Aufzeichnung eines Signales mit verringerter Daten-Bitrate in aufeinanderfolgenden Schrägspuren auf dem bandförmigen Aufzeichnungsmedium (78) mit einer Flächen-Aufzeichnungsdichte von wenigstens ungefähr 0,8 Bit/$\mu$m$^2$.

**11.** Verwendung eines magnetischen Aufzeichnungsmediums (78) nach Anspruch 10, **dadurch gekennzeichnet**, daß auf die Schrägspuren mit einer Breite von ungefähr 5,0 $\mu$m aufgezeichnet wird.

**12.** Verwendung eines magnetischen Aufzeichnungsmediums (78) nach Anspruch 10 oder 11, **dadurch gekennzeichnet,** daß das Signal mit verringerter Daten-Bitrate mit einer minimalen Wellenlänge von 0,5 $\mu$m aufgezeichnet wird.

**Revendications**

**1.** Support d'enregistrement magnétique (78) comprenant

un substrat (B) de film non magnétique, et
une couche magnétique formée sur une grande face du substrat (B), la couche magnétique étant formée d'un mince film métallique magnétique déposé par un procédé sous vide,
la couche magnétique étant formée de plusieurs films élémentaires de couche magnétique, et
une couche intermédiaire non magnétique placée entre les films élémentaires de couche magnétique,
la couche intermédiaire non magnétique ayant une épaisseur qui ne dépasse pas 10 % de l'épaisseur totale de la couche magnétique, la rugosité de surface (Ra) étant égale ou inférieure à 0,003 $\mu$m,

caractérisé en ce que le produit de la densité de flux magnétique résiduel (T), de l'épaisseur (d) et du champ coercitif (A/m) est égal ou supérieur à 8.10$^{-3}$ T.A (100 G.cm.Oe).

**2.** Support d'enregistrement magnétique (78) comprenant :

un substrat (B) d'un film non magnétique, et
une couche magnétique formée sur une grande face du substrat (B),
la couche magnétique étant formée sur un mince film métallique magnétique déposé par un procédé sous vide,
la couche magnétique étant formée par dépôt oblique d'un matériau magnétique sur le substrat, et
la rugosité de surface (Ra) est égale ou inférieure à 0,003 $\mu$m,

caractérisé en ce que
la couche magnétique remplit les conditions suivantes :

le produit de la densité de flux magnétique résiduel (T), de l'épaisseur (d) et du champ coercitif (A/m) est égal ou supérieur à $8.10^{-3}$ T.A. (100 G.cm.Oe), et
la couche magnétique est formée sur le substrat avec un angle d'incidence compris entre 40 et 70°.

3. Support d'enregistrement magnétique (78) selon la revendication 1, caractérisé en ce que la couche magnétique est formée par dépôt en oblique du matériau magnétique sur le substrat (B) avec un angle d'incidence compris entre 40 et 70°.

4. Support d'enregistrement magnétique (78) selon la revendication 1 ou 3, dans lequel l'épaisseur de la couche intermédiaire est déterminée par la largeur à la moitié du maximum du pic d'oxygène obtenu par spectroscopie électronique d'Auger.

5. Support d'enregistrement magnétique (78) selon l'une quelconque des revendications 1 à 4, caractérisé en ce que le support (78) est une bande magnétique enroulée dans une cassette et ayant une largeur qui ne dépasse pas 8 mm environ et une épaisseur qui ne dépasse pas 7 nm environ.

6. Application d'un support d'enregistrement magnétique (78) selon l'une quelconque des revendications 1 à 5, caractérisée par l'enregistrement et la lecture de signaux analogiques d'image à l'aide d'au moins une tête magnétique (13).

7. Application d'un support d'enregistrement magnétique (78) selon l'une quelconque des revendications 1 à 5, caractérisé par
l'enregistrement magnétique de signaux numériques d'image comprenant :

la conversion d'un signal numérique d'image d'entrée en données de séquences (Y, U, V) constitué de plusieurs données d'éléments d'image,
le codage par compression (3, 4) des données d'éléments d'image,
le codage par canal (11) des données codées par compression, et
l'enregistrement des données codées par canal sur un support d'enregistrement magnétique (78) avec au moins une tête magnétique (13a, 13b) montée sur un tambour rotatif.

8. Application d'un support d'enregistrement magnétique (78) selon l'une des revendications 6 et 7, caractérisé en ce que chacune des têtes (13) a un entrefer délimité par des parties de la tête respective ayant une densité de flux magnétique à saturation d'au moins 1,4 T (14 kG).

9. Application d'un support d'enregistrement magnétique (78) selon l'une quelconque des revendications 6, 7 et 8, caractérisée en ce que deux têtes d'enregistrement (13A, 13B) sont destinées à enregistrer dans des pistes adjacentes, et les deux têtes d'enregistrement (13A, 13B) ont des entrefers (104) ayant des angles d'azimut différents d'environ ± 20°.

10. Application d'un support d'enregistrement magnétique (78) selon l'une quelconque des revendications 6 à 9, caractérisée par l'enregistrement d'un signal à fréquence réduite de bits de données dans les pistes successives inclinées du support d'enregistrement (78) avec une densité de surface d'enregistrement d'au moins 0,8 bit/$\mu m^2$.

11. Application d'un support d'enregistrement magnétique (78) selon la revendication 10, caractérisée en ce que l'enregistrement donne une largeur d'environ 5,0 $\mu m$ à chacune des pistes inclinées.

12. Application d'un support d'enregistrement magnétique (78) selon la revendication 10 ou 11, caractérisée en ce que le signal à fréquence réduite de bits de données est enregistré avec une longueur d'onde minimale de 0,5 $\mu m$.

## FIG. 1

EP 0 488 377 B1

# FIG. 2

# FIG. 3

# FIG. 4

# FIG. 5

EP 0 488 377 B1

# FIG. 6

<u>11</u>

scramble circuit — 71 → processor — 72

# FIG. 7

<u>22</u>

processor — 73 → decoding circuit — 74 → unscramble circuit — 75

# FIG. 8A

13A

76

13B

# FIG. 8B

76

13A 13B

# FIG. 9

13A

20°

20°

13 B

# FIG. 10

TB  TA  TB  TA

20°

20°

# FIG. 11A

# FIG. 11B

# FIG. 12A

# FIG. 12B

## FIG. 13

## FIG. 14

| | number of magnetic layers | oxid nm | total thick. magn. layer nm | roughness R. nm | energy product $\times 10^{-3}$ T$\times$A (G $\times$ cm $\times$ Oe) | bit error rate |
|---|---|---|---|---|---|---|
| example 1 | 2 | 2 0,0 | 2 0 0,0 | 2,5 | 1 0,8(1 3 5) | $5.2 \times 10^{-5}$ |
| 2 | 2 | 1 0,0 | 2 0 0,0 | 2,1 | 1 1,3(1 4 2) | $4.0 \times 10^{-5}$ |
| 3 | 2 | 2 0,0 | 2 0 0,0 | 2,3 | 1 1,2(1 4 0) | $3.6 \times 10^{-5}$ |
| 4 | 2 | 2 0,0 | 2 0 0,0 | 2,6 | 1 1,1(1 3 9) | $7.8 \times 10^{-5}$ |
| comparativ example | | | 2 0 0 0 | 2 8 | 9,7 (1 2 1) | $4.8 \times 10^{-4}$ |

# FIG. 15

## FIG. 16

## FIG. 17

| | angle $\theta$ (°) | energy product $\times 10^{-3}$ T$\times$A (G$\times$cm$\times$Oe) | $\lambda = 0.5 \mu m$ (dB) | bit error rate |
|---|---|---|---|---|
| example 5 | 40 - 70 | 11,8 ( 1 4 8 ) | 0.5 | $5.0 \times 10^{-5}$ |
| 6 | 45 - 65 | 12,2 ( 1 5 3 ) | 0.7 | $3.3 \times 10^{-5}$ |
| comparativ example | 40 - 90 | 11,2 ( 1 4 0 ) | 0 | $6.6 \times 10^{-4}$ |

## FIG. 18

| | number of magnetic layers | nm | total thick. magn. layer nm | angle θ (°) | roughness R. (A) | energy product $\times 10^{-3}$ T×A (G×cm×Oe) | bit error rate |
|---|---|---|---|---|---|---|---|
| example 7 | 2 | 2 0,0 | 2 0 0,0 | 4 0 – 7 0 | 2 5 | 10,4 (1 3 0) | $2.8 \times 10^{-5}$ |
| 8 | 2 | 2 0,0 | 2 0 0,0 | 4 0 – 7 0 | 2 5 | 10,4 (1 3 0) | $3.3 \times 10^{-5}$ |
| example | 2 | 2 0,0 | 2 0 0,0 | 4 5 – 9 0 | 2 5 | 10,8 (1 3 5) | $5.1 \times 10^{-5}$ |
| comparativ example | | | 2 0 0,0 | 4 0 – 9 0 | 2 8 | 9,7 (1 2 1) | $4.8 \times 10^{-4}$ |

# FIG. 19